**Europäisches Patentamt**

**European Patent Office**

**Office européen des brevets**

(19)

(11) Veröffentlichungsnummer: **0 130 546**
**B1**

# (12) EUROPÄISCHE PATENTSCHRIFT

(45) Veröffentlichungstag der Patentschrift:
**10.05.89**

(21) Anmeldenummer: **84107373.7**

(22) Anmeldetag: **27.06.84**

(51) Int. Cl.⁴: **D 06 B 9/06,** D 06 F 43/08

(54) **Verfahren zur Rückgewinnung von Lösemitteln bei der Textilbehandlung.**

(30) Priorität: **01.07.83 DE 3323727**

(43) Veröffentlichungstag der Anmeldung:
**09.01.85 Patentblatt 85/2**

(45) Bekanntmachung des Hinweises auf die Patenterteilung:
**10.05.89 Patentblatt 89/19**

(84) Benannte Vertragsstaaten:
**AT BE CH DE FR GB IT LI LU NL SE**

(56) Entgegenhaltungen:
**DE-A-2 406 554**
**FR-A-1 303 062**
**FR-A-2 173 337**
**FR-A-2 217 462**
**FR-A-2 275 583**
**FR-A-2 351 202**

(73) Patentinhaber: **HOECHST AKTIENGESELLSCHAFT,**
**Postfach 80 03 20, D-6230 Frankfurt am Main 80**
**(DE)**

(72) Erfinder: **Preisegger, Ewald, Entenstrasse 7, D-6085**
**Nauheim (DE)**

### Beschreibung

Gegenstand der Erfindung ist ein Verfahren zur Rückgewinnung von Lösemitteln bei der Textilreinigung mit organischen Lösemitteln, die bei der Trocknungsphase anfallen und die nach dem Abpumpen der flüssigen Anteile in Form eines Luft-/Lösemitteldampfgemisches vorliegen und durch Abkühlen teilweise auskondensiert werden, wobei die noch dampfförmig verbleibenden Lösemittelanteile anschließend durch Aktivkohle adsorbiert werden.

Lösemitteldämpfe, die bei der Textilausrüstung anfallen, können ebenfalls nach diesem Verfahren zurückgewonnen werden.

Bei der Textilreinigung werden heute überwiegend organische Lösemittel wie Trichlorfluormethan (FKW 11), Trichlortrifluoräthan (FKW 113), Perchlorethylen oder Methylenchlorid verwendet.

Diese organischen Lösemittel müssen bei der Textilreinigung während der Trocknungsphase zurückgewonnen werden, um Lösemittelverluste und damit verbundene Umweltbelastungen zu vermeiden. Für die Rückgewinnung der Lösemittel während der Trocknungsphase der gereinigten Textilien sind verschiedene Verfahren bekannt. So wird das FKW 113 Dampf/Luftgemisch aus dem Trommelraum der Reinigungsmaschine über ein Gebläse im Kreislauf zu etwa 50 % über den Verdampfer einer Kälteanlage geführt, wobei sich eine Restdampfkonzentration entsprechend dem Sättigungspartialdruck von FKW 113 bei der Temperatur des Gemisches am Austritt des Verdampfers einstellt. Die restlichen 50 % des Dampf/Luftgemisches werden im Bypass über eine elektrische Wiederstandsheizung aufgeheizt und in die Reinigungstrommel zurückgefahren. Da sich aufgrund der Temperaturänderungen die Konzentration und damit auch die Dichte des FKW 113 Dampf/Luftgemisches in der Anlage ändert, muß wie z. B. in der FR-A-2 351 202 beschrieben eine Vorrichtung zum Druckausgleich vorgesehen werden. Durch diese Vorrichtung wird in den einzelnen Phasen Luft eingesaugt bzw. ein FKW 113 Dampf/Luftgemisch wieder ausgeblasen. In dieser Ausgleichsleitung ist ein Aktivkohlefilter zur Rückhaltung der FKW 113 Dämpfe vorhanden.

Das Perchlorethylen/Luftgemisch wird bei der Trocknung der Textilien über einen einfachen, mit Kühlwasser beaufschlagten Wärmeüberträger geführt. Im Falle der sogenannten "geschlossenen Per-Maschine" wird der gesamte Volumenstrom des umgewälzten Perchlorethylendampf/Luftgemisches über den Verdampfer einer Kälteanlage geführt. Auch bei diesem Verfahren sind in der Druckausgleichsleitung Aktivkohlefilter installiert.

Bei den Verfahrensabläufen in FKW 113 - und Perchlorethylen-Maschinen stellt sich nach der Trocknung der Textilien in der Reinigungstrommel eine Lösemittelkonzentration ein, die dem Sättigungsdruck des jeweiligen Lösemittels bei der Temperatur entspricht, mit der das Lösemitteldampf/Luftgemisch den Verdampfer verläßt. Beim Öffnen der Ladetür und beim Entladen der Trommel sind also entsprechende Lösemittelverluste unvermeidlich. Das in der Aktivkohle gebundene Lösemittel muß ebenfalls als Verlust betrachtet werden.

Bei Verwendung von FKW 11 als Lösemittel werden die Textilien mit einem auf ca. 50 bis 60° C erwärmten FKW 11 Dampfstrom getrocknet und der FKW 11 Dampf am Verdampfer einer Kälteanlage mit einer Verdampfungstemperatur von ca. -20° C (entspricht einer Abscheidetemperatur von ca. -5° C) abgeschieden. Danach wird die Reinigungstrommel evakuiert; dabei erneutes Abscheiden von FKW 11 Dampf am Verdampfer der Kälteanlage und Belüften der Reinigungstrommel mit Frischluft. Bei diesem Verfahren muß der FKW 11 Anteil, der nach dem Evakuieren der Reinigungstrommel noch in der Trommel und in den Textilien verblieben ist, als Verlust betrachtet werden. Außerdem hat es sich gezeigt, daß das Evakuieren relativ störanfällig ist und zu gelegentlichen Ausfällen der Reinigungsmaschine führt.

Lösemittelverluste von 400 bis 500 g pro Reinigungscharge sind bei den bekannten Verfahren nicht zu vermeiden. Hinzu kommt bei Verwendung von FKW 11 aufwendiges Evakuieren.

Der Erfindung liegt demnach die Aufgabe zugrunde, ein Verfahren zu schaffen, mit dem die Lösemittelverluste beträchtlich vermindert werden können und mit dem das aufwendige Evakuieren unnötig wird.

Die Aufgabe wird durch das gattungsgemäße Verfahren gelöst, das dadurch gekennzeichnet ist, daß man einen Sättigungspartialdruck des Lösemittels im Lösemitteldampf/Luftgemisch von höchstens 0,25 bar, vorzugsweise von 0,05 bis 0,2 bar einstellt und die in der Aktivkohle adsorbierten Lösemittelanteile mit einem Lösemitteldampf/Luftgemisch gleicher Konzentration wie bei der Adsorption und bei Temperaturen von ca. 100 bis 150° C desorbiert.

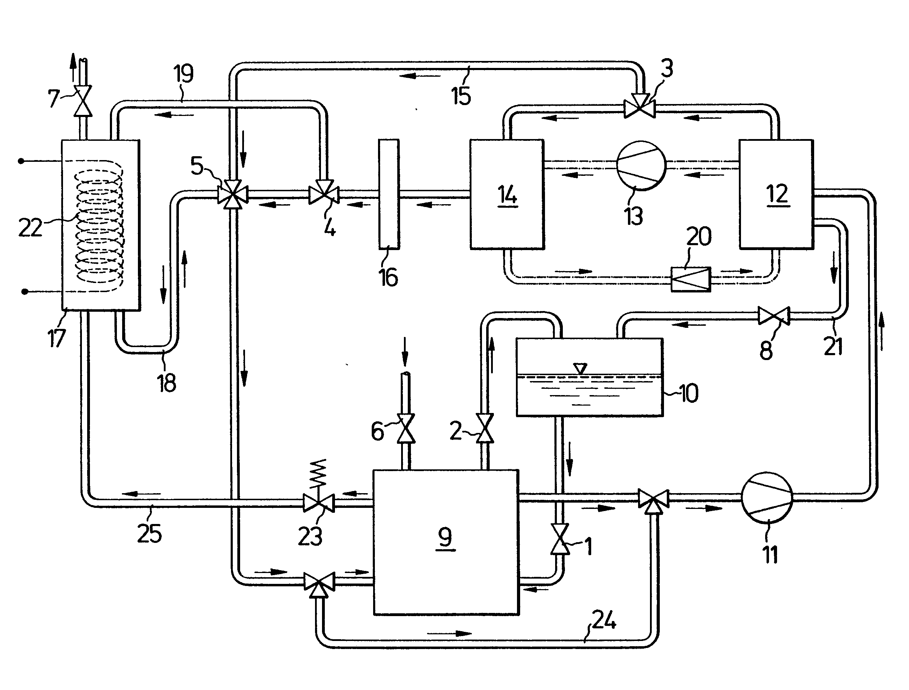

Zum besseren Verständnis wird das erfindungsgemäße Verfahren anhand einer modifizierten, handelsüblichen Reinigungsanlage beschrieben, wie sie in der Figur dargestellt ist.

Nach Abschluß des Reinigungsprogramms, Abschleudern und Abpumpen des Lösemittels in den Vorratstank 10 erfolgt die Trocknung der in der Reinigungstrommel 9 befindlichen Textilien. Hierzu werden die Ventile 1 und 2 zunächst geschlossen, Ventile 6 und 8 bleiben geschlossen. Getrocknet wird mit einem Lösemitteldampf/Luftgemisch, das mit einem Gebläse 11 in einem geschlossenen Kreislauf geführt wird. Der Kreislauf besteht aus Reinigungstrommel 9, Gebläse 11, Verdampfer 12, Ventil 3, Verflüssiger 14, Heizregister 16, Ventile 4 und 5, Reinigungstrommel 9.

Nun wird die Kälteanlage eingeschaltet, die aus Verdampfer 12, Verdichter 13, Verflüssiger 14 und Expansionsventil 20 besteht. Ihre Leistung wird so bemessen, daß sich während der Trocknungsphase ein Sättigungspartialdruck des Lösemittels im Lösemitteldampf/Luftgemisch von höchstens 0,25 bar, vorzugsweise 0,05 bis 0,2 bar einstellt. Dies ist neben ausreichender Verdichterleistung durch entsprechende Dimensionierung der Wärmetauscherfläche am Verdampfer 12 zu erreichen. Das Gebläse 11 saugt Lösemitteldampf/Luftgemisch aus der Reinigungstrommel 9 an und fördert es über den Verdampfer 12 der Kälteanlage, wodurch sich eine Konzentration an Lösemitteldampf entsprechend dem Sättigungspartialdruck bei der Temperatur am Verdampferaustritt einstellt. Überschüssige Lösemittelanteile werden kondensiert und fließen über eine Leitung 21 bei geöffnetem Ventil 8 in den Vorratstank 10. Das entfeuchtete Lösemitteldampf/Luftgemisch gelangt nun über das Ventil 3 in den Verflüssiger 14 der Kälteanlage, wo es wieder erwärmt wird. Das Heizregister 16 erhöht die Temperatur dieses Gemisches auf ca. 25 bis 40 K über die Siedetemperatur des Lösemittels. Das erwärmte Gemisch gelangt dann über die Ventile 4 und 5 wieder in die Reinigungstrommel 9, wo es wieder Lösemitteldampf aufnimmt. Dieser Kreislauf wird nun solange fortgesetzt, bis die Textilien in der Reinigungstrommel getrocknet sind. Nun wird die Leistung des Gebläses 11 auf ca. 25 % reduziert, Ventil 8 geschlossen, das Heizregister 16 abgeschaltet und die Ventile 3 und 5 so umgeschaltet, daß das Lösemitteldampf/Luftgemisch nach Passieren des Verdampfers 12 mit einer Temperatur, die dem Sättigungspartialdruck des Lösemittels von maximal 0,25 bar entspricht, über Leitungen 15 und 18 ein Aktivkohlefilterbett 17 passiert. Die Ventile 6 und 7 werden gleichzeitig geöffnet. Der Lösemitteldampf wird an der Aktivkohle adsorbiert, die lösemittelfreie Luft über Ventil 7 ausgeblasen. Gleichzeitig wird die Reinigungstrommel 9 mit Frischluft gespült, die über Ventil 6 angesaugt wird. Diese Betriebsweise wird solange beibehalten, bis die Reinigungstrommel mit Frischluft gefüllt ist. Nach Beendigung der Trommelspülung mit Frischluft werden die Ventile 4 und 5 so umgeschaltet, daß keine Verbindung zwischen Aktivkohlefilterbett 17 und Reinigungstrommel 9 mehr besteht. Nun kann die Ladetür der Reinigungstrommel 9 geöffnet und die Textilien entnommen werden.

Nach dem Einbringen neuer Textilien wird zunächst das Aktivkohlefilterbett 17 regeneriert. Das geschieht ebenfalls wieder im geschlossenen Kreislauf, wobei das Aktivkohlefilterbett in umgekehrter Richtung wie bei der Adsorption durchströmt wird. Für diesen Vorgang wird zunächst Ventil 6 geschlossen, Ventil 8 geöffnet und die Ventile 3, 4 und 5 so geschaltet, daß das Gas den nachstehend beschriebenen Weg nehmen kann:

Nach Einschalten des Gebläses 11 und der Kälteanlage wird zunächst Luft aus der Reinigungstrommel 9 angesaugt, im Verdampfer 12 der Kälteanlage abgekühlt, im Verflüssiger 14 wieder erwärmt und im Heizregister 16 soweit aufgeheizt, daß der Luftstrom beim Austritt eine Temperatur von ca. 100 bis 150°C erreicht. Dieser heiße Luftstrom wird nun über Leitung 19 zum bereits vorher aufgeheizte Aktivkohlefilterbett 17 geführt, wodurch adsorbiertes Lösemittel nieder desorbiert und mit dem Luftstrom über Leitung 18 ausgetragen wird. Eventuell genügt auch bereits die Beheizung des Aktivkohlebettes. Bei weiterer Durchgängen reichert sich Lösemitteldampf im umlaufenden Gasstrom an. Im Verdampfer 12 wird Lösemittel kondensiert. Schließlich stellt sich ein Gleichgewicht entsprechend dem Sättigungspartialdruck der am Austritt des Verdampfers 12 herrschenden Temperatur ein. Ventil 7 bleibt bei diesem Vorgang geschlossen. Diese Betriebsweise wird solange fortgeführt, bis eine neue Gleichgewichtsbeladung des Aktivkohlefilterbettes 17 erreicht ist, die einem Lösemitteldampfanteil von maximal 20 Vol.-% in der durchgeblasenen Luft bei einer Temperatur von ca. 150°C entspricht. Ist dieser Zustand erreicht, wird die Heizung 22 des Aktivkohlefilterbettes 17 abgeschaltet; gleichzeitig werden die Ventile 4 und 5 so geschaltet, daß keine Verbindung mehr zwischen Aktivkohlefilterbett und Reinigungstrommel 9 besteht. Das Gebläse 11 wird abgeschaltet, Ventil 8 geschlossen und die Ventile 1 und 2 geöffnet. Nun kann die Reinigungstrommel 9 mit Lösemittel geflutet werden und das Reinigungsprogramm beginnen.

Der beim Aufheizen des Lösemittels in der Trommel auf 20 bis 25°C entstehende Überdruck kann über ein Überdruckventil 23 (Einstellung auf ca. 1,4 bar absolut) und Leitung 25 in das bereits regenerierte Aktivkohlefilter entspannt werden (bei geöffnetem Ventil 7).

Soll die Desorption zeitlich parallel mit einem anderen Chargenabschnitt durchgeführt werden, kann über eine zu sätzlich zu installierende Leitung 24 der Trommelraum umgangen werden.

**Patentanspruch**

Verfahren zur Rückgewinnung von Lösemitteln bei der Textilreinigung mit organischen Lösemitteln und bei der Textilausrüstung, die bei der Trocknungsphase anfallen und die nach dem Abpumpen der flüssigen Anteile in Form eines Lösemitteldampf/Luftgemisches vorliegen und durch Abkühlen teilweise auskondensiert werden, wobei die noch dampfförmig verbleibenden Lösemittelanteile anschließend durch Aktivkohle adsorbiert werden, dadurch gekennzeichnet, daß man einen Sättigungspartialdruck des Lösemittels im Lösemitteldampf/Luftgemisch von höchstens 0,25 bar, vorzugsweise von 0,05 bis 0,2 bar einstellt und die in der Aktivkohle adsorbierten Lösemittelanteile mit einem Lösemitteldampf/Luftgemisch gleicher Konzentration wie bei der Adsorption und bei Temperaturen von ca. 100 bis 150°C desorbiert.

## Claim

A process for the recovery of solvents in the cleaning of textiles using organic solvents and in the imparting of finishes to textiles, which solvents are obtained in the drying phase and which are present in the form of a solvent vapor/air mixture after the liquid components have been pumped away and which are partially condensed out by cooling, the portions of solvent still remaining in the vapor state being subsequently adsorbed by active charcoal, wherein a saturation partial pressure of the solvent in the solvent vapor/air mixture of not more than 0.25 bar, preferably 0.05 to 0.2 bar, is set up and the fractions of solvent adsorbed in the active charcoal are desorbed by means of a solvent vapor/air mixture of the same concentration as in the adsorption process and at temperatures of approx. 100 to 150°C.

## Revendication

Procédé de récupération de solvants lors d'un nettoyage de textiles et d'apprêt textile avec des solvants organiques, qui précipitent pendant la phase de séchage et qui se présentent, après l'évacuation des parties liquides par pompage, sous la forme d'un mélange d'air et de vapeur de solvant et qui sont condensés partiellement par refroidissement, auquel cas les fractions de solvant subsistant encore sous forme de vapeur sont ensuite adsorbées par du charbon actif, caractérisé en ce qu on règle une pression partielle de saturation du solvant dans le mélange d'air et de vapeur de solvant qui est au maximum de 0,25 bar, de préférence de 0,05 à 0,2 bar et on effectue la désorption des fractions de solvants adsorbées dans le charbon actif en utilisant un mélange d'air et de vapeur de solvant ayant la même concentration que lors de l'adsorption et en desorbant à des températures d'environ 100 à 150°C.